# EUROPÄISCHE PATENTSCHRIFT

(11) **EP 2 488 576 B1**
(45) Veröffentlichungstag und Bekanntmachung des Hinweises auf die Patenterteilung: **31.12.2014**
(21) Anmeldenummer: 10763712.6
(22) Anmeldetag: 12.10.2010
(51) Int. Cl.: C08J 9/40, C08G 18/10, C08G 18/08

(54) **VERFAHREN ZUR HERSTELLUNG EINER NANOPORÖSEN BESCHICHTUNG AUF POLYURETHANBASIS**
METHOD FOR PRODUCING A NANOPOROUS POLYURETHANE-BASED COATING
PROCÉDÉ DE FABRICATION D'UN REVÊTEMENT NANOPOREUX À BASE DE POLYURÉTHANE

(30) Priorität: 16.10.2009 EP 09173323
(43) Veröffentlichungstag der Anmeldung: 22.08.2012
(73) Patentinhaber: BASF SE, 67056 Ludwigshafen (DE)
(72) Erfinder: PRISSOK, Frank, 49448 Lemförde (DE); FRICKE, Marc, 49090 Osnabrück (DE); SCHLIEBE, Stefan, 49448 Hüde (DE)
(86) Internationale Anmeldenummer: PCT/EP2010/065261
(87) Internationale Veröffentlichungsnummer: WO 2011/045306

(56) Entgegenhaltungen:
- EP-A2- 1 700 872
- WO-A1-00/24799
- DE-A1-102005 025 970
- US-A1- 2006 141 239

## Beschreibung

Die vorliegende Erfindung betrifft ein Verfahren zur Herstellung eines nanoporösen Schaums bei dem man eine Monomerkomponente (A), umfassend ein mehrfunktionales Isocyanat (A1) und ein Lösungsmittel (C), bereitstellt und die Monomerkomponente (A) mit Wasserdampf in Kontakt bringt. Weiter umfasst die vorliegende Erfindung einen nanoporösen Schaum, erhältlich nach einem solchen Verfahren sowie einen Nanoschaum Komposit, erhältlich indem man die Monomerkomponente (A) vor dem in Kontakt bringen mit Wasserdampf auf einen Träger (B) aufträgt. Der Nanoschaum Komposit kann als Dämmstoff zur Wärme- oder Schalldämmung, als Filtermaterial oder als Katalysatorträger eingesetzt werden.

Üblicherweise werden organische Nanoschaumstoffe oder sogenannte Xerogele und Aerogele durch das Sol-Gel-Verfahren hergestellt. Dabei wird zunächst ein Sol auf Basis einer reaktiven organischen Gelvorstufe und Lösungsmittel hergestellt und danach das Sol durch eine vernetzende Reaktion zu einem Gel geliert. Um aus dem Gel ein poröses Material zu erhalten, muss das Lösungsmittel entfernt werden. Dabei kann die Entfernung des Lösungsmittels bei überkritischen Bedingungen, wodurch die sogenannten Aerogele erhalten werden, oder unterhalb des kritischen Drucks, wodurch die sogenannten Xerogele erhalten werden, durchgeführt werden. Die Entfernung oberhalb des kritischen Drucks hat den Nachteil, dass dies apparativ sehr aufwendig ist, während die Entfernung des Lösungsmittels bei subkritischen Bedingungen durch Kapillarkräfte eine starke Belastung auf die vernetzten Strukturen des Gels ausüben, wodurch diese teilweise zerstört werden und das Gel bei Abnahme der Porosität schrumpft.

Bekannte organische Xerogele sind beispielsweise auf Basis von Phenol-Aldehyd-Harzen oder auf Basis von Polyurethan und/oder Polyharnstoff aufgebaut.

Aus der WO2007/146945 sind zudem Aerogel-Schaumkomposite bekannt. Die genannten Aerogel-Schaumstoffkomposite umfassen insbesondere anorganische Aerogele, welche in Schaumstoffen wie z. B. solchen aus Polyurethan gehärtet werden, woran sich ein überkritischer Trocknungsschritt anschließt. Die Publikation erwähnt die mögliche Verwendung von organischen Aerogelen ebenso wie die Anwendung unterkritischer Trocknung. Die Publikation verwendet eine Matrix aus Schaumstoff, um die inhärente Brüchigkeit der (anorganischen) Aerogele zu reduzieren und gleichzeitig weitere Eigenschaften mechanischer Art wie Flexibilität zu verbessern.

Xerogele auf Basis von Polyharnstoff oder Polyurethan sind an sich bekannt und den anorganischen Aerogelen in den mechanischen Eigenschaften oft überlegen.

So beschreibt die WO2008/138978, dass sich mit Xerogelen auf Basis von aromatischem Polyharnstoff mit Diaminodiphenylmethan und mehrfunktionalen Isocyanaten Xerogele mit geringer thermischer Leitfähigkeit und geringer mittlerer Porengröße erhalten lassen.

In WO 00/24799 werden nanoporöse Schäume hergestellt aus in Aceton gelösten Polyisocyanaten ohne Wasserdampf zu verwenden.

DE 10 2005 025 970 beschreibt ein Verfahren zur Herstellung von nanoporösen Polyisocyanatadditionsprodukten durch Umsetzung von Isocyanaten in Gegenwart von Lösungsmitteln mit Polyesterpolyolen ohne Wasserdampf zu benützen.

Die thermische Leitfähigkeit der bekannten Xerogele ist jedoch nicht für alle Anwendungen ausreichend. Für Anwendungen im Bereich von Drücken oberhalb des Vakuumbereiches, beispielsweise im Druckbereich von ungefähr 1 bis ungefähr 100 mbar, jedoch insbesondere bei Normaldruck ist die thermische Leitfähigkeit im Allgemeinen nicht zufriedenstellend. Zudem sind die Materialeigenschaften, beispielsweise die mechanische Stabilität des Xerogels, die Porosität und insbesondere die Dichte, nicht ausreichend.

Aufgabe der vorliegenden Erfindung war es, ein alternatives Herstellungsverfahren für organische Nanoschaumstoffe zu liefern, welches kostengünstig und einfach durchführbar ist.

Die vorliegende Aufgabe wurde gelöst durch ein Verfahren zur Herstellung eines nanoporösen Schaums indem man eine Monomerkomponente (A), umfassend ein mehrfunktionales Isocyanat (A1) und ein Lösungsmittel (C), bereitstellt und die Monomerkomponente (A) mit Wasserdampf in Kontakt bringt.

Dabei wird im Rahmen der vorliegenden Erfindung unter einem nanoporösen Schaum ein poröses Material mit einer Porosität von mindestens 70 Vol.-% und einer volumengemittelten mittleren Porengröße von höchstens 50 Mikrometern, bevorzugt höchstens 10 Mikrometern und mindestens 50 Nanometern und besonders bevorzugt von höchstens 5 Mikrometern und mindestens 100 Nanometern verstanden.

Zur Herstellung der Monomerkomponente (A) werden mehrfunktionales Isocyanat (A1) und Lösungsmittel (C) gemischt.

Als mehrfunktionales Isocyanat können alle bekannten organischen Isocyanate mit einer Funktionalität größer als 1 eingesetzt werden. Beispielsweise kommen aliphatische, cycloaliphatische und aromatische Isocyanate in Betracht. Derartige mehrfunktionale Isocyanate sind an sich bekannt oder können nach an sich bekannten Methoden hergestellt werden. Die mehrfunktionalen Isocyanate können insbesondere auch als Mischungen eingesetzt werden, so dass die Komponente (A1) in diesem Fall verschiedene mehrfunktionale Isocyanate enthält.

Geeignete Isocyanate umfassen beispielsweise 2,2'-, 2,4'- und/oder 4,4'-Diphenylmethandiisocyanat (MDI), höherkernige Homologe des MDI, sogenanntes Polymer-MDI, 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylendiisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und/oder 4,4'-, 2,4'- und 2,2'-Dicyclohexylmethandiisocyanat.

Vorzugsweise werden als mehrfunktionale Isocyanate isocyanatgruppenhaltige Prepolymere eingesetzt. Als isocyanatgruppenhaltiges Prepolymer kann im Rahmen der Erfindung das Umsetzungsprodukt von Polyisocyanaten (a) mit gegenüber Isocyanaten reaktiven Verbindungen (b) sowie gegebenenfalls Kettenverlängerungs- und/oder Vernetzungsmitteln (c) eingesetzt werden, wobei das Polyisocyanat (a) im Überschuss eingesetzt wird.

Besonders geeignet sind als mehrfunktionale Prepolymere solche mit einem Isocyanatgehalt von kleiner als 30 %, besonders bevorzugt von 5 bis 29% ganz besonders bevorzugt von 7 bis 28 % und insbesondere von 10 bis 25%.

Als Polyisocyanate (a) können alle aus dem Stand der Technik bekannten aliphatischen, cycloaliphatischen und aromatischen zwei- oder mehrwertigen Isocyanate sowie beliebige Mischungen daraus eingesetzt werden. Vorzugsweise werden die oben genannten Isocyanate eingesetzt.

Vorzugsweise werden 2,4-Toluoldiiisocyanat, 2,6-Toluoldiiisocyanat, 2,4'-Diphenylmethandiisocyanat und 4,4'-Diphenylmethandiisocyanat und höherkernige Homologe des Diphenylmethandiisocyanats (Polymer-MDI) sowie Gemische dieser Isocyanate, Uretonimin insbesondere eine Mischung aus 2,4'-Diphenylmethandiisocyanat und 4,4'-Diphenylmethandiisocyanat als Polyisocyanat (a) eingesetzt.

Die eingesetzten Polyisocyanate (a) weisen vorzugsweise eine mittlere Isocyanatfunktionalität von kleiner 3, besonders bevorzugt von kleiner 2,5 und insbesondere von kleiner 2,2 auf. Ganz besonders bevorzugt weisen die Polyisocyanate (a) eine Funktionalität von 2,0 auf.

Als gegenüber Isocyanaten reaktive Verbindungen (b) können alle Verbindungen mit zumindest zwei gegenüber Isocyanatgruppen reaktiven Wasserstoffatomen eingesetzt werden. Vorzugsweise werden Polyesterole, Polyetherole, oder Mischungen von Polyetherolen mit Polyolen die eine tertiäre Amingruppe aufweisen insbesondere Polyetherole, eingesetzt.

Polyole, die tertiäre Aminogruppen aufweisen, können beispielsweise durch Reaktion von sekundären Aminen, wie beispielsweise Ethylendiamin, mit Alkylenoxiden, beispielsweise Ethylenoxid oder Propylenoxid, erhalten werden.

Geeignete Polyetherole werden nach bekannten Verfahren, beispielsweise durch anionische Polymerisation mit Alkalihydroxiden oder Alkalialkoholaten als Katalysatoren und unter Zusatz mindestens eines Startermoleküls, das 2 bis 5, vorzugsweise 2 bis 4 und besonders bevorzugt 2 bis 3, insbesondere 2 reaktive Wasserstoffatome gebunden enthält, oder durch kationische Polymerisation mit Lewis-Säuren, wie Antimonpentachlorid oder Bortrifluorid-Etherat, aus einem oder mehreren Alkylenoxiden mit 2 bis 4 Kohlenstoffatomen im Alkylenrest hergestellt. Weiter können als Katalysatoren auch Multimetallcyanidverbindungen, sogenannte DMC-Katalysatoren, eingesetzt werden. Geeignete Alkylenoxide sind beispielsweise Tetrahydrofuran, 1,3-Propylenoxid, 1,2-bzw. 2,3-Butylenoxid und vorzugsweise Ethylenoxid und/oder 1,2-Propylenoxid. Die Alkylenoxide können einzeln, alternierend nacheinander oder als Mischungen verwendet werden. Bevorzugt werden 1,2-Propylenoxid, Ethylenoxid oder Mischungen aus 1,2-Propylenoxid und Ethylenoxid verwendet. Besonders bevorzugt enthalten die Polyetherpolyole mindestens 5 Gew.-% und insbesondere mindestens 10 Gew.-% Ethylenoxyd.

Als Startermolekül kommen vorzugsweise Wasser oder 2- und 3-wertige Alkohole in Betracht, wie Ethylenglykol, 1,2-oder 1,3-Propandiol, Diethylenglykol, Dipropylenglykol, 1,4-Butandiol, Glycerin und Trimethylolpropan.

Die bevorzugten Polyetherpolyole, besonders bevorzugt Polyoxypropylen- oder Polyoxypropylen-polyoxyethylen-polyole, besitzen eine Funktionalität von 2 bis 5, besonders bevorzugt von 2 bis 3 und Molekulargewichte von 400 bis 9.000, vorzugsweise 1.000 bis 8.000, besonders bevorzugt 1.500 bis 7.000 und insbesondere von 2.000 bis 6.000 g/mol.

Gegebenenfalls können auch Kettenverlängerungs- und/oder Vernetzungsmittel (c) eingesetzt werden. Die Zugabe der Kettenverlängerungs- und/oder Vernetzungsmittel (c) kann vor, zusammen mit oder nach der Zugabe der Polyole erfolgen. Als Kettenverlängerungsmittel und/oder Vernetzungsmittel (c) werden Substanzen mit einem Molekulargewicht von vorzugsweise kleiner 400 g/mol, besonders bevorzugt von 60 bis 350 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder in Form von Mischungen eingesetzt werden. Werden Kettenverlängerer eingesetzt, sind 1,3- und 1,2-Propandiol, Dipropylenglycol, Tripropylenglycol 1,3 Butandiol besonders bevorzugt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht von Polyisocyanaten (a), gegenüber Isocyanat reaktiven Verbindungen (b) und Kettenverlängerungsmitteln und / oder Vernetzungsmitteln (c) zum Einsatz.

Die Isocyanatprepolymere sind erhältlich, indem vorstehend beschriebene Polyisocyanate (a), beispielsweise bei Temperaturen von 30 bis 100 °C, bevorzugt bei etwa 80 °C, mit gegenüber Isocyanaten reaktiven Verbindungen (b) sowie gegebenenfalls Kettenverlängerungs- und / oder Vernetzungsmittel (c) zum Prepolymer umgesetzt werden. Dabei werden Polyisocyanat (a), gegenüber Isocyanat reaktive Verbindung (b), sowie gegebenenfalls Kettenverlängerungs- und / oder Vernetzungsmittel (c) vorzugsweise in einem Verhältnis von Isocyanatgruppen zu gegenüber Isocyanaten reaktiven Gruppen von 1.5 : 1 bis 15 : 1, vorzugsweise 1,8 : 1 bis 8 : 1 miteinander vermischt. Besonders bevorzugt werden zur Herstellung der Prepolymere Polyisocyanate und die Verbindung mit gegenüber Isocyanaten reaktiven Gruppen und Kettenverlängerungs- und / oder Vernetzungsmittel in einem Verhältnis miteinander vermischt, dass der NCO-Gehalt des hergestellten Prepolymers im Bereich von 1,0 bis 20, insbesondere von 2 bis 15 Gew.-%, bezogen auf das Gesamtgewicht des hergestellten Isocyanatprepolymers, liegt. Anschließend können vorzugsweise flüchtige Isocyanate abgetrennt werden, vorzugsweise durch Dünnschichtdestillation.

Besonders bevorzugte Isocyanatprepolymere werden erhalten auf Basis von MDI-Isomeren und einem Polyetherol auf Propylenoxyd und/oder Ethylenoxyd. Vorzugsweise ist der Gehalt an Ethylenoxyd größer 10 Gew.-%, bezogen auf das Gesamtgewicht der Komponente (b).

Die Monomerkomponente (A) kann außerdem übliche, dem Fachmann bekannte Hilfsmittel als weitere Bestandteile enthalten. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001.

Als Lösungsmittel (C) kommen prinzipiell eine oder ein Gemisch aus mehreren Verbindungen in Betracht, wobei das Lösungsmittel (C) bei den Temperatur- und Druckbedingungen, unter denen die Mischung in Schritt (a) bereitgestellt wird (kurz: Lösungsbedingungen), flüssig ist. Die Zusammensetzung des Lösungsmittels (C) wird so gewählt, dass es in der Lage ist, das mehrfunktionale Isocyanat (A1) zu lösen oder zu dispergieren, bevorzugt zu lösen. Bevorzugte Lösungsmittel (C) sind solche, die ein Lösungsmittel für das mehrfunktionale Isocyanat (A1) sind und dieses vollständig lösen.

Als Lösungsmittel (C) kommen die aus dem Stand der Technik bekannten Lösungsmittel für Isocyanat-basierte Polymere in Frage.

Als Lösungsmittel (C) kommen beispielsweise Dialkylether, zyklische Ether, Ketone, Alkylalkanoate, Amide wie Formamid und N-Methylpyrollidon, Sulfoxide wie Dimethylsulfoxid, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Weiterhin kommen Acetale, insbesondere Diethoxymethan, Dimethoxymethan und 1,3-Dioxolan, als Lösungsmittel (C) in Betracht.

Dialkylether und zyklische Ether sind als Lösungsmittel (C) bevorzugt. Bevorzugte Dialkylether sind insbesondere solche mit 2 bis 6 Kohlenstoffatomen, insbesondere Methyl-Ethylether, Diethylether, Methyl-Propylether, Methyl- Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Ketone mit Alkylgruppen mit bis zu 3 Kohlenstoffatomen pro Substituent sind als Lösungsmittel (C) ebenfalls bevorzugt. Besonders bevorzugt sind als Lösungsmittel (C) folgende Ketone: Aceton, Cyclohexanon, Methyl-t-Butylketon und Methyl-Ethylketon.

Als Lösungsmittel (C) sind außerdem Alkylalkanoate bevorzugt, insbesondere Methylformiat, Methylacetat, Ethylformiat, Butylacetat und Ethylacetat. Bevorzugte halogenierte Lösungsmittel sind in der WO 00/24799, Seite 4, Zeile 12 bis Seite 5, Zeile 4 beschrieben.

Dialkylether, zyklische Ether, Ketone und Ester sind als Lösungsmittel (C) ganz besonders bevorzugt.

In vielen Fällen ergeben sich besonders geeignete Lösungsmittel (C), indem man zwei oder mehrere miteinander vollständig mischbare Verbindungen, ausgewählt aus den vorgenannten Lösungsmitteln, in Form eines Gemisches einsetzt.

Vorzugsweise weist das Lösungsmittel (C) einen Siedepunkt von kleiner 100 °C, besonders bevorzugt kleiner 95 °C und größer 10 °C und insbesondere kleiner 90 °C und größer 25 °C auf.

Besonders bevorzugt sind Lösungsmittel, die mit Wasser mischbar sind, wie Aceton und Acetylacetat.

Dabei wird das Lösungsmittel (C) vorzugsweise in solchen Mengen eingesetzt, dass der Gehalt an mehrfunktionalem Isocyanat (A1) kleiner als 40 Gew.-%, bevorzugt kleiner als 30 und größer als 5 Gew.-%, besonders bevorzugt kleiner als 20 und größer als 8 Gew.-% und insbesondere kleiner als 20 und größer als 10 Gew.-% ist.

Neben mehrfunktionalem Isocyanat und Lösungsmittel (C) können auch mehrfunktionale Amine, oder Alkohole, insbesondere Amine oder Alkohole mit einer Funktionalität größer als 2, bevorzugt größer als 2,5 zugegeben werden. Vorzugsweise werden solche Amine aber nicht zugegeben.

Die Monomerkomponente (A) wird anschließend mit Wasserdampf in Kontakt gebracht. Dazu wird vorzugsweise ein Strom Wasserdampf an der Monomerkomponente (A) vorbeigeführt. Dies geschieht vorzugsweise bei erhöhter Temperatur, beispielsweise bei 70 bis 200 °C vorzugsweise bei 80 bis 150 °C und besonders bevorzugt bei 95 bis 120 °C.

Dabei wird die Monomerkomponente (A) vor dem in Kontaktbringen mit Wasserdampf vorzugsweise auf einen Träger (B) aufgebracht. Dabei handelt es sich vorzugsweise bei dem Träger (B) um einen porösen Gegenstand, vorzugsweise um einen makroporösen Gegenstand. Als Träger (B) können beispielsweise offenzellige Schaumstoffe, Vliese oder Gewebe eingesetzt werden.

Makroporös bedeutet im Rahmen der vorliegenden Erfindung, dass der mittlere Porendurchmesser mehr als 1 Mikrometer (1000 nm), bevorzugt mehr als 10 Mikrometer, besonders bevorzugt mehr als 50 Mikrometer beträgt, bestimmt durch Quecksilberintrusionsmessung nach DIN 66133. Der so bestimmte Wert ist ein volumengewichteter mittlerer Porendurchmesser.

Vliese sind nicht gewebte, nicht gewirkte und nicht getuftete Erzeugnisse aus Fasern, bei denen der Zusammenhalt im Allgemeinen durch die den Fasern eigene Haftung gegeben ist. Sie werden auch als Nonwovens bezeichnet und können beispielsweise Faservliese, Spinnvliese oder Wirrvliese sein. Unter Vliesen sollen hier auch Vliesstoffe und Filze verstanden werden. Vorzugsweise werden Vliese mechanisch verfestigt, beispielsweise durch Vernadeln, Vermaschen oder Verwirbeln mittels scharfer Wasser- oder Luftstrahlen. Vliese können auch adhäsiv oder kohäsiv verfestigt werden. Adhäsiv verfestigte Vliese sind beispielsweise erhältlich durch Verkleben der Fasern mit flüssigen Bindemitteln oder durch Schmelzen von Bindefasern, die dem Vlies bei der Herstellung zugesetzt wurden. Kohäsiv verfestigte Vliese sind beispielsweise durch Anlösen der Fasern mit geeigneten Chemikalien und Anwendung von Druck.

Geeignete Vliese weisen als Substrat (d.h. vor der Beschichtung) je nach chemischer Zusammensetzung in der Regel ein Flächengewicht von 10 bis 2000, bevorzugt 50 bis 1000 und insbesondere 100 bis 800 g/m² auf.

Gewebe sind Erzeugnisse aus gekreuzten Fasern, vorzugsweise rechtwinklig gekreuzten Fasern. Geeignete Gewebe haben als Substrat (vor der Beschichtung) je nach chemischer Zusammensetzung in der Regel ein Flächengewicht von 10 bis 2000, bevorzugt 30 bis 1000 und insbesondere 50 bis 500 g/m².

Im Falle eines Vlieses oder Gewebes ist unter dem mittleren Porendurchmesser vorzugsweise die mittlere Größe der Poren zu verstehen, die durch die beabstandeten Fasern des Vlieses oder Gewebes gegeben sind. Die Bestimmung des mittleren Porendurchmessers der Vliese oder Gewebe erfolgt ebenfalls durch Quecksilberintrusionsmessung nach DIN 66133.

Dabei ist die Herstellung von Geweben oder Vliesen auf Basis von faserförmigen Materialien bekannt. Als faserförmige Materialien können alle bekannten faserförmigen Materialien, wie Kunststofffasern, Kohlefasern, Glasfasern oder Cellulosefasern, vorzugsweise Glasfasern eingesetzt werden.

In einer weiteren Ausführungsform handelt es sich bei dem Träger (B) um einen offenzelligen, makroporösen Schaumstoff.

Offenzellig bedeutet bei Schäumen, dass die Mehrzahl der Schaumzellen nicht geschlossen, sondern miteinander verbunden ist. Der Volumenanteil der Poren, die nicht miteinander verbunden, sondern geschlossen sind (nicht-offenzelliger oder geschlossenzelliger Anteil) beträgt bei offenzelligen Schäumen bevorzugt weniger als 50 Vol.-%. Besonders bevorzugt beträgt der nicht-offenzellige Volumenanteil der Poren bei offenzelligen Schäumen höchstens 30 Vol.-%, beispielsweise höchstens 20 Vol.-%, und insbesondere höchstens 10 Vol.-%.

Unter dem mittleren Porendurchmesser ist im Falle der offenzelligen Schäume vorzugsweise die mittlere Größe der durch Wände und/oder Stege begrenzten Poren zu verstehen. Die Bestimmung des mittleren Porendurchmessers erfolgt als volumengewichteter Mittelwert mittels Quecksilberintrusionsmessung nach DIN 66133, worauf sich die in dieser Erfindung angegebenen Porendurchmesser der unbeschichteten Substrate beziehen. Geeignete Schaumstoffe haben vor der Umsetzung je nach chemischer Zusammensetzung (siehe weiter unten) üblicherweise eine Dichte von 3 bis 500, bevorzugt 4 bis 300 und besonders bevorzugt 5 bis1 00 g/dm³, bestimmt nach DIN EN ISO 845.

Die intrinsische Oberfläche der Schaumstoffe vor der Umsetzung beträgt in der Regel bis zu 30 m²/g, beispielsweise von 1 bis 20 m²/g, ermittelt mittels Gasadsorption nach dem BET (Brunauer, Emmet, Teller-Verfahren gemäß DIN 66131).

Chemisch betrachtet ist der offenzellige, makroporöse Schaumstoff vorzugsweise aufgebaut auf Basis mindestens eines organischen Polymers. Dabei bedeutet "auf Basis" bzw. "auf Basis von" einen Anteil von mindestens 50 Gew.-%, bevorzugt mindestens 60, besonders bevorzugt mindestens 70 und insbesondere mindestens 80 Gew.-% am Substrat.

Prinzipiell kommen als offenzelliger makroporöser Schaumstoff alle organischen Polymere in Betracht, die zu einem Schaum verarbeitet werden können. Wird der Schaumstoff vorzugsweise ausgewählt aus Amino-Aldehyd-Harzen, Phenol-Aldehyd-Harzen, Polysytyrol, Polyvinylchlorid, Polyurethanen, Polyamiden, Polyestern, Polyolefinen und Cellulose.

Vorzugsweise ist der offenzellige makroporöse Schaumstoff auf Basis von Aminoplast, insbesondere Melamin-Formaldehyd aufgebaut. Derartige Schaumstoffe sind dem Fachmann bekannt oder können nach bekannten Methoden hergestellt werden. Entsprechende Schaumstoffe auf Basis von Melamin-Formaldehyd sind beispielsweise Basotect® der BASF SE.

Die Rohdichte des offenzelligen Schaumstoffes liegt in der Regel im Bereich von 3 bis 100 g/l, bevorzugt im Bereich von 5 bis 20 g/l. Die Zellzahl liegt üblicherweise im Bereich von 50 bis 300 Zellen/25 mm. Die Zugfestigkeit liegt bevorzugt im Bereich von 100 bis 150 kPa und die Bruchdehnung im Bereich von 8 bis 20%.

Zur Herstellung eines offenzelligen Schaumstoffes auf Basis des als Aminoplast bevorzugten Melamin/Formaldehyd (MF)-Harzes kann nach EP-A 071 672 oder EP-A 037 470 eine hochkonzentrierte, treibmittelhaltige Lösung oder Dispersion eines Melamin-Formaldehyd-Vorkondensates mit Heißluft, Wasserdampf oder durch Mikrowellenbestrahlung verschäumt und ausgehärtet werden.

Das Molverhältnis Melamin zu Formaldehyd ist in der Regel kleiner als 1 : 1,0, es liegt bevorzugt zwischen 1 : 1 und 1 : 5, insbesondere zwischen 1 : 1,3 und 1 : 1,8. Es hat sich gezeigt, dass ein relativ hoher Sulfitgruppengehalt bei konstantem Melamin zu Formaldehyd-Verhältnis eine höhere Formaldehyd-Emission des Schaumstoffs zur Folge hat. Das eingesetzte Vorkondensat sollte deshalb praktisch keine Sulfitgruppen enthalten, d.h., der Sulfitgruppengehalt sollte unter 1 %, vorzugsweise unter 0,1 % und insbesondere 0 % betragen.

Ohne Behandlung ist der Melamin-Schaumstoff hydrophil und lässt sich leicht zerbröseln. Er kann durch chemische Modifizierung oder Nachbehandlung hydrophob und/oder mit verstärkenden Komponenten, wie in DE-A 10 2007 009127 beschrieben, formstabiler gemacht werden.

Die Kombination aus erfindungsgemäßem nanoporösem Schaumstoff und Schaumstoffen aus Melamin-Formaldehyd führt zu Nanoschaum-Komposites mit besonders günstiger Porosität und Dichte.

Der offenzellige, makroporöse Schaumstoff kann dazu auf übliche Weise mit der Monomerkomponente (A) in Kontakt gebracht werden. Vorzugsweise wird dazu der offenzellige, makroporöse Schaumstoff mit der Lösung der Monomerkomponente (A) imprägniert, beispielsweise durch Tränken oder indem man die Monomerkomponente auf den Träger (B) gibt und diesen mechanisch bearbeitet, beispielweise durch Walken. Dabei wird vorzugsweise so vorgegangen, dass die zugänglichen Poren möglichst vollständig benetzt werden. Dabei können auch die Bestandteile der Monomerkomponente (A) einzeln mit dem Träger (B) in Kontakt gebracht und während des Auftragens gemischt werden, dies ist aber nicht bevorzugt.

Weiter ist Gegenstand der Erfindung ein nanoporöser Schaum, herstellbar nach einem erfindungsgemäßen Verfahren sowie insbesondere ein nanoporöser Komposit, der erhalten wird durch in Kontakt bringen eines Trägers (B) mit der Monomerlösung (A).

Ein erfindungsgemäßer Nanoschaum Komposit hat hervorragende Schalldämmungs- und Wärmeisolationseigenschafen und ist daher hervorragend als Dämmmaterial zur Schall- und Wärmedämmung geeignet. Beispielsweise können erfindungsgemäße Nanoschaum-Komposits in Isolationspaneelen, beispielsweise unter reduziertem Druck, eingesetzt werden.

Weiter eignet sich ein erfindungsgemäßer Nanoschaum-Komposit hervorragend als Filtermaterial, insbesondere zur Abtrennung von kleinsten Verunreinigungen in Flüssigkeits- und Gasströmen.

Ebenfalls geeignet ist ein erfindungsgemäßer Nanoschaum-Komposit als Träger von Katalysatoren.

Im Folgenden wird die vorliegende Erfindung anhand eines Beispiels verdeutlicht:

### Beispiel:

### Herstellung der Monomerkomponente (A)

### Rohstoffe:

| | |
|---|---|
| 2588g | einer 1:1 Mischung aus 4,4' MDI und 2,4 MDI |
| 1487g | eines Polyols auf der Basis von Glycerin, Propylenoxid und Ethylenoxid mit einer mittleren Funktionalität von 2,5 und einem zahlenmittleren Molekulargewicht von 5170g/mol und einem Gehalt an Ethylenoxyd von 20,7 Gew.-% |
| 0,4g | Diglycol-bis-Chlorformiat (DIBIS) |

### Geräte:

Ein 6l 4-Hals Glasreaktionskolben mit passender Heizhaube und Temperiereinrichtung, Rührer und Dosierbehälter

### Schutzgaseinrichtung

### Versuchsdurchführung:

Isocyanat und DIBIS werden in dem 6l 4-Hals Glasreaktionskolben vorgelegt und unter Rühren mittels Heizhaube auf 80°C temperiert.

Das Polyol wird mittels Tropftrichter innerhalb von 10 min zudosiert.

Die gesamte Reaktion findet unter Stickstoffbeschleierung statt.

Das Reaktionsgemisch wird 1 h bei 80°C gerührt und anschleißend abgekühlt.

Die Monomerkomponente (A) besitzt jetzt einen NCO Gehalt von etwa 20,4%, eine Dichte von etwa 1,136 g/l bei 25°C und eine Viskosität von etwa 325 mPas bei 25°C.

### Herstellung des nanoporösen Schaums

### Rohstoffe

| | |
|---|---|
| 10g | Basotect® der BASF SE |
| 10g | Monomerkomponente (A) |
| 30g | Aceton |

### Versuchsdurchführung:

Das Basotect wir in einen 5l Metallbehälter, der Löchern im Boden besitzt, eingewogen.

Die Monomerkomponente (A) wird in einem Becherglas eingewogen und mit dem Aceton gelöst.

Die Lösung wird tropfenweise und unter Rühren auf das Basotect in dem Metallbehälter gegeben. Nach einer weiteren guten Durchmischung wird ein rundes 6kg Gewicht auf die Öffnung des Metallbehälters gelegt.

Der gelochte Behälter wird in einen Dampfgenerator eingehängt, wobei der Wasserdampf das Basotect-Monomerkomponenten-Gemisch durchströmt und das System zur Reaktion bringt. Nachdem kein Acetongeruch mehr vernehmbar ist, wird der naonoporöse Schaum dem Metallbehälter entnommen und getrocknet.

Auf dem Basotect-Stützschaum ist im Rasterelektronenmikroskop ein offenzelliger, nanoporöser Schaum erkennbar.

## Patentansprüche

1. Verfahren zur Herstellung eines nanoporösen Schaums bei dem man:
eine Monomerkomponente (A), umfassend ein mehrfunktionales Isocyanat (A1) und ein Lösungsmittel (C), bereitstellt und
die Monomerkomponente (A) mit Wasserdampf in Kontakt bringt,
wobei die Monomerkomponente (A) vor dem in Kontakt bringen mit Wasserdampf auf einen Träger (B) aufgebracht wird.

2. Verfahren nach Anspruch 1, **dadurch gekennzeichnet, dass** als mehrfunktionales Isocyanat (A1) ein Prepolymer eingesetzt wird, das erhältlich ist durch Umsetzen oder Vermischen von Polyisocyanaten (a) mit gegenüber Isocyanaten reaktiven Verbindungen (b), sowie gegebenenfalls Kettenverlängerungs- und / oder Vernetzungsmitteln (c), wobei das Polyisocyanat (a) im Überschuss eingesetzt wird.

3. Verfahren nach Anspruch 1 oder 2, **dadurch gekennzeichnet, dass** die Monomerkomponente (A) einen Isocyanatgehalt von kleiner als 30 Gew.-%, aufweist.

4. Verfahren nach einem der Ansprüche 1 bis 3, **dadurch gekennzeichnet, dass** das Lösungsmittel (C) einen Siedepunkt von kleiner 100 °C bei Atmosphärendruck aufweist.

5. Verfahren nach einem der Ansprüche 1 bis 4, **dadurch gekennzeichnet, dass** der Träger (B) ein offenzelliger, makroporöser Schaumstoff ist, der mit der Monomerkomponente (A) imprägniert wird.

6. Verfahren nach einem der Ansprüche 1 bis 5, **dadurch gekennzeichnet, dass** der Träger (B) eine volumenmittlere Porengröße von 20 bis 1000 Mikrometer aufweist.

7. Verfahren nach einem der Ansprüche 1 bis 6, **dadurch gekennzeichnet, dass** der Träger (B) ein Reaktiv-Polykondensationsharz enthält.

8. Verfahren nach einem der Ansprüche 1 bis 7, **dadurch gekennzeichnet, dass** der offenzelligen, makroporösen Schaumstoff (B) ein Melamin-Formaldehyd-Schaumstoff ist.

9. Verfahren nach einem der Ansprüche 1 bis 8, **dadurch gekennzeichnet, dass** der Träger (B) ein Vlies oder ein Gewebe ist.

10. Verfahren nach Anspruch 9, **dadurch gekennzeichnet, dass** das Vlies oder Gewebe ein Vlies oder Gewebe auf Basis von Glasfasern ist.

11. Nanoschaum-Komposit, erhältlich nach einem der Ansprüche 1 bis 10.

12. Verwendung eines Nanoschaum-Komposits nach Anspruch 11 als Dämmstoff zur Wärme- oder Schalldämmung, als Filtermaterial oder als Katalysatorträger.

## Claims

1. A process for producing a nanoporous foam, said process comprising:
providing a monomeric component (A) comprising a polyfunctional isocyanate (A1) and a solvent (C),
and
contacting said monomeric component (A) with water vapor,
wherein said monomeric component (A) is applied to a carrier (B) before the contacting with water vapor.

2. The process according to claim 1 wherein said polyfunctional isocyanate (A1) comprises a prepolymer obtainable by reacting or mixing polyisocyanates (a) with isocyanate-reactive compounds (b) and also optionally chain-extending and/or crosslinking agents (c), wherein said polyisocyanate (a) is used in excess.

3. The process according to claim 1 or 2 wherein said monomeric component (A) has an isocyanate content of less than 30% by weight.

4. The process according to any one of claims 1 to 3 wherein said solvent (C) has a boiling point of below 100°C at atmospheric pressure.

5. The process according to any one of claims 1 to 4 wherein said carrier (B) is an open-cell macroporous foam, which is impregnated with said monomeric component (A).

6. The process according to any one of claims 1 to 5 wherein said carrier (B) has a volume-average pore size of 20 to 1000 micrometers.

7. The process according to any one of claims 1 to 6 wherein said carrier (B) comprises a reactive polycondensation resin.

8. The process according to any one of claims 1 to 7 wherein said open-cell macroporous foam (B) is a melamine-formaldehyde foam.

9. The process according to any one of claims 1 to 8 wherein said carrier (B) is a fleece or a woven fabric.

10. The process according to claim 9 wherein said fleece or woven fabric is based on glass fibers.

11. A nanofoam composite obtainable according to any one of claims 1 to 10.

12. The use of a nanofoam composite according to claim 11 as insulant for thermal or acoustical insulation, as filtering material or as catalyst carrier.

## Revendications

1. Procédé pour la préparation d'une mousse nanoporeuse, dans lequel
on met à disposition un composant monomère (A), comprenant un isocyanate polyfonctionnel (Al) et un solvant (C) et
on met en contact le composant monomère (A) avec la vapeur d'eau,
le composant monomère (A) étant appliqué sur un support (B) avant la mise en contact avec la vapeur d'eau.

2. Procédé selon la revendication 1, **caractérisé en ce qu'**on utilise, comme isocyanate polyfonctionnel (Al), un prépolymère qui peut être obtenu par transformation ou mélange de polyisocyanates (a) avec des composés (b) réactifs par rapport aux isocyanates, ainsi que le cas échéant des agents d'allongement de chaîne et/ou de réticulation (c), le polyisocyanate (a) étant utilisé en excès.

3. Procédé selon la revendication 1 ou 2, **caractérisé en ce que** le composant monomère (A) présente une teneur en isocyanate inférieure à 30% en poids.

4. Procédé selon l'une quelconque des revendications 1 à 3, **caractérisé en ce que** le solvant (C) présente un point d'ébullition inférieur à 100°C à la pression atmosphérique.

5. Procédé selon l'une quelconque des revendications 1 à 4, **caractérisé en ce que** le support (B) est une mousse macroporeuse, à cellules ouvertes qui est imprégnée par le composant monomère (A).

6. Procédé selon l'une quelconque des revendications 1 à 5, **caractérisé en ce que** le support (B) présente une dimension moyenne volumique des pores de 20 à 1000 µm.

7. Procédé selon l'une quelconque des revendications 1 à 6, **caractérisé en ce que** le support (B) contient une résine de polycondensation réactive.

8. Procédé selon l'une quelconque des revendications 1 à 7, **caractérisé en ce que** la mousse (B) macroporeuse, à cellules ouvertes est une mousse de mélamine-formaldéhyde.

9. Procédé selon l'une quelconque des revendications 1 à 8, **caractérisé en ce que** le support (B) est un non-tissé ou un tissu.

10. Procédé selon la revendication 9, **caractérisé en ce que** le non-tissé ou le tissu est un non-tissé ou un tissu à base de fibres de verre.

11. Composite de nanomousse pouvant être obtenu selon l'une quelconque des revendications 1 à 10.

12. Utilisation d'un composite de nanomousse selon la revendication 11 comme matériau isolant pour l'isolation thermique ou sonore, comme matériau de filtre ou comme support de catalyseur.
